Europäisches Patentamt

European Patent Office

Office européen des brevets

(11) Publication number: **0 139 132 B1**

# EUROPEAN PATENT SPECIFICATION

(45) Date of publication of patent specification: **06.12.89**

(51) Int. Cl.⁴: **G 01 M 11/04, G 12 B 5/00**

(21) Application number: **84109508.6**

(22) Date of filing: **09.08.84**

(54) Assembly for leveling a surface.

(30) Priority: **30.08.83 US 527883**

(43) Date of publication of application:
**02.05.85 Bulletin 85/18**

(45) Publication of the grant of the patent:
**06.12.89 Bulletin 89/49**

(84) Designated Contracting States:
**BE CH DE FR GB IT LI NL**

(56) References cited:
**EP-A-0 027 195**
**DE-U-6 932 060**
**US-A-3 730 473**
**US-A-4 336 917**

**F & M FEINWERKTECHNIK & MESSTECHNIK,**
**vol. 88, no. 5, July/August 1980, pages 233-236,**
**München; H. DE BOER et al.: "Ein**
**schwingungsisolierter Messtisch mit Niveau-**
**Regelung"**

(73) Proprietor: **THE PERKIN-ELMER CORPORATION**
**761 Main Avenue**
**Norwalk Connecticut 06856-0181 (US)**

(72) Inventor: **deMey II, Charles F.**
**108 Seventy Acre Road**
**West Redding Connecticut 06896 (US)**

(74) Representative: **Patentanwälte Grünecker,**
**Kinkeldey, Stockmair & Partner**
**Maximilianstrasse 58**
**D-8000 München 22 (DE)**

EP 0 139 132 B1

Courier Press, Leamington Spa, England.

## Description

The present invention relates to an assembly for maintaining a surface in a preselected plane with respect to a base member; said assembly comprising:

a plurality of pneumatic mounts supported by said base member,

a source of pressurized gas;

means for individually controlling the inflation or deflation of each of said mounts, said means being disposed between said source and mounts wherein each said inflation or deflation controlling means includes:

an inflation valve, said inflation valve including means for controlling gaseous communication between said source and said associated mount; and

a relief valve, said relief valve including means for controlling gaseous communication between the ambient and said associated mount, and

means, associated with each said inflation or deflation controlling means for activating said inflation or deflation controlling means, said activating means being automatically responsive to the position of said optical bench with respect to said preselected plane. The invention is in particular suited for use in leveling a surface of an optical bench in an analytical instrument.

The most critical portion, with respect to mechanical stability, of a spectroscopic instrument is the optical components. The stability of the optical components are a major determining factor of an instrument's sensitivity, accuracy, and repeatability. Consequently, the mounting of such components is of considerable importance. In fact, such components are usually mounted on a unitary base, e.g. a casting. Of equal importance is the positioning of the optical bench casting with respect to the remainder of the elements of an instrument, in particular, with respect to the spectral source and the detector. Thus, the mounting of the optical bench casting must be capable of withstanding mechanical shocks and vibrations.

Ordinarily, the optical bench casting is mounted on a rigid frame by means of a plurality of conventional mechanical shock mounts. However, such mechanical shock mounts are often insufficient to provide the required degree of shock and vibration isolation.

As an alternative to the more conventional mechanical shock mounts there are commercially available pneumatic spring mounts. When inflated between the recommended pressures, such pneumatic spring mounts provide excellent shock and vibration isolation. However, pneumatic spring mounts have a number of drawbacks. For example, initially inflating the mounts to the proper level is difficult, partially because the internal volume thereof is small. Further, it can be quite maddening to initially level a surface while remaining within the proper inflation pressure range when four or more mounts are employed since the slightest adjustment to any single one inherently affects all others. Additionally, the maintaining of the proper level over a period of time requires constant inspection and corrective action.

From F and M Feinwerktechnik und Messtechnik Volume 88, No. 5 pages 233 to 236 a leveling system is known wherein a plane table is supported on three pneumatic mounts the pressure of each may be separately controlled by a first valve being connected with the pressure source and a second valve being connected with the atmosphere. The first and the second valve respectively are electrically controlled by control signals which are optically derived from the deviation of the surface plane of the plane table with respect to a pendulum.

It is one object of the present invention to provide an assembly for automatically leveling one surface with respect to a reference member.

This object is accomplished in accordance with the invention in that said valve controlling means are pushbuttons.

According to a preferred embodiment each of said activating means includes an activating arm, the position of said arm being responsible to the position of said surface.

Furthermore, said activating means may include a lever, said lever having one end thereof defining a first arm being operative with said pushbuttons, and having a second arm cooperatively associated with said surface whereby the position of said first arm is responsible to the position of said surface.

According to a further preferred embodiment said first arm of said lever is adapted to translate in one plane; and said valve controlling means are in close proximity to opposite surfaces of said lever whereby if said first arm translates in one direction in said plane said inflation valve is actuated whereas if said first arm translates in the opposite direction in said plane said relief valve is actuated.

An assembly is regarded as being advantageous wherein said controlling means is a first arm which effectively translates bidirectionally; and said valve controlng means are in close proximity to opposite surfaces of said first arm whereby if said first arm translates in one direction said inflation valve is actuated whereas if said first arm translates in the opposite direction in said plane said relief valve is actuated.

Preferably the assembly further comprises a valve mounting bracket, said bracket aligning said gaseous communication controlling means of said valves with said activating means.

Said bracket may be U-shaped having one of said valves mounted in each side thereof.

Said valve activating means may be a first arm of a lever said first arm extending between the sides of said U-shaped bracket.

Other objects and advantages will become apparent to those skilled in the art from the following detailed description read in conjunction with the appended claims and the drawings attached hereto.

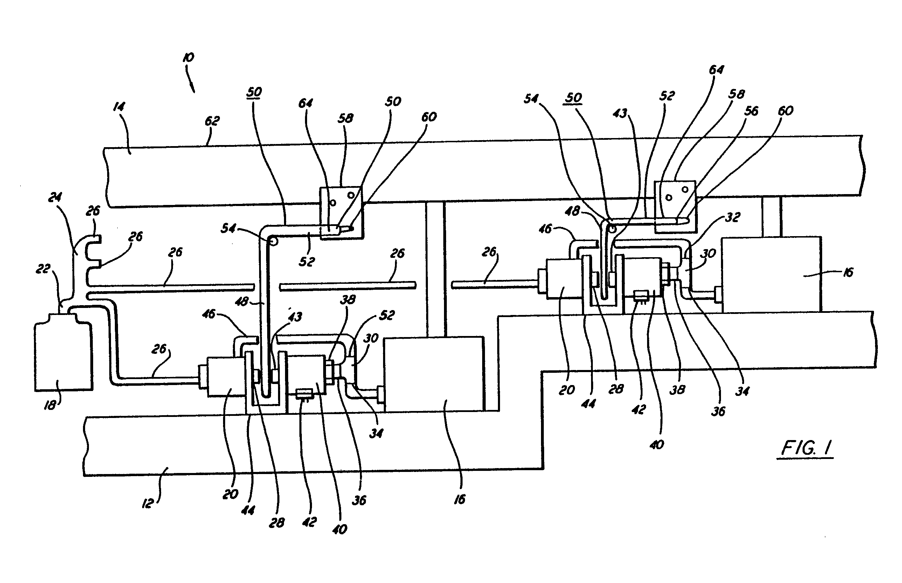

## Brief Description of the Drawing

The single Figure of the drawing, not drawn to scale, is a partial perspective view of an assembly embodying the principles of the present invention.

## Detailed Description of the Invention

An assembly, generally indicated at 10 in the Drawing and embodying the principles of the present invention, includes a frame member 12 having an optical bench 14 disposed thereover and spaced apart therefrom by a plurality of pneumatic mounts 16.

The assembly 10 also includes a source 18 of pressurized gas communicating via a plurality of two port inflation valves 20 with the plurality of pneumatic mounts 16. In one particular embodiment, a primary gaseous conduit 22 provides gaseous communication of the pressurized gas from the source 18 into a manifold 24 having a plurality of outlet conduits 26 branching therefrom each conduit 26 of which feeds only one pneumatic mount 16. Preferably, each inflation valve 20 is arranged in a respective conduit 26 so that the pressurized gas flow thereacross is regulated thereby, for example, by means of an inflation valve pushbutton 28. In the arrangement shown gas flow across the inflation valve 20 is prevented when there is no pressure on the pushbutton 28 whereas gas flows thereacross from the source 18 to the mount 16 when the pushbutton 28 is depressed.

In the embodiment shown, a T-junction 30 is serially positioned in each of the conduits 26 between the inflation valve 20 and the respective mount 16 via first and second ports, 32 and 34, thereof. The third port 36 of the T-junction 30 is connected to the inlet port 38 of a two-port relief valve 40 thereby establishing gaseous communication between the mount 16 and the relief valve 40. The second port 42 of the relief valve 40 is vented to the surrounding ambient. However, due to the extreme sensitivity of the optical elements the vented gas should be deflected to avoid introducing instability or non-repeatability errors in the measurements. Preferably, the relief valve 40 is also operated by means of a pushbutton 43 whereby, when the pushbutton 43 is depressed, pressurized gas flows from the mount 16 to the ambient; whereas, when the pushbutton 43 is unbiassed, gas flow thereacross is prevented.

The inflation valve 20 and the relief valve 40 are mounted to the frame member 12 via, for example, a U-shaped bracket 44. The valves, 20 and 40, are mounted so that the pushbuttons, 28 and 43 respectively, thereof project into the cavity 46 of the U-shaped bracket 44 and abut an arm 48 of a lever 50 projecting therebetween.

The lever 50 is cooperatively connected to the optical bench 14 by a second arm 52 thereof. The lever 50 contacts a pivot pin 54 whereby if any portion of the optical bench 14 is depressed or raised, such as for example by adding or removing an accessory, the lever 50 rotates about the pivot pin 54. The movement of a second arm 52 of the lever 50 is preferably controlled by an interlocking means 56 with the optical bench 14.

In the preferred embodiment, the interlocking means 56, includes a bracket 58 extending from the bench 14 and having a slot 60 therein. The slot 60, during the assembly of the bracket 58, is preferably, although not necessarily, arranged to be in parallel to the surface 62 of the optical bench 14. The second arm 52 of the lever 50 includes a guidepin 64, preferably extending perpendicular thereto, which projects into a slot 60 in the bracket 58 in a slidable fashion. Thus, if the surface 62 of the optical bench 14 is shifted in a vertical direction, either up or down, the lever 50 is pivoted so that the first arm 48 depresses either the pushbutton 28 of the inflation valve 20 or the pushbutton 43 of the relief valve 40 respectively.

Each of the plurality of pneumatic mounts 16 of the assembly 10 is provided with an inflation/relief valve arrangement described above. Thus, upon initial inflation of the mounts 16 of the surface 62 seeks its own level with respect to the frame member 12. As shown, even if the frame member 12 includes an indentation, into which a pneumatic 16 is positioned, the assembly 10 nevertheless functions to maintain the surface 62 of the optical bench 14 in a preselected plane above the frame member 12.

In one particular configuration, the optical bench 14 is designed to carry thereon the optical components of a Michelson Interferometer for use in a FT/IR spectrophotometer. In such an instance, during the assembly of the spectrophotometer, the optical bench 14 is mounted upon the pneumatic mounts 16 which are inflated to within the optimum operating range. This is necessary since in the use of such mounts 16 the volume of air is relatively small and, to obtain the best shock and vibration isolation, the pressure within must be within a relatively small range. Once this is accomplished, the assembly 10 described above automatically accommodates changes in weight on the optical bench 14 due to accessories which are either added to or removed from the instrument and which change the weight and the weight distribution thereon. Further, this assembly 10 operates throughout the life of the instrument and automatically compensates, over a long period of time, for any leakage or normal deflations of mounts without operator or external assistance.

In a specific embodiment the pneumatic mounts selected were type SLM-1 manufactured and sold by Barry Corporation of Watertown, Massachusetts. These mounts may be referred to as STABL-LEVL® which is a registered trademark of the Barry Corporation. The valves incorporated are of the poppet type marketed and manufactured by Clippard Corporation of Cincinnati, Ohio. The U-shaped bracket 44 was formed to ensure surface contact between the first arm 48 and the pushbuttons, 20 and 42 respectively. The first arm was about 2 centimeters wide and about 5 centimeters long. In the embodiment described, nitrogen was selected as the pressurized gas although pressurized air or carbon dioxide could also be used.

Although the present invention has been described herein with respect to an exemplary embodiment, it is understood that other configurations and arrangements may be made. Consequently, the present invention is not deemed limited to the embodiment described herein, but is only limited by the appended claims and the reasonable interpretation thereof.

## Claims

1. An assembly for maintaining a surface (62) in a preselected plane (61) with respect to a base member (12); said assembly comprising:

a plurality of pneumatic mounts (16) supported by said base member (12);

a source of pressurized gas (18);

means (28, 43) for individually controlling the inflation or deflation of each of said mounts (16), said means being disposed between said source (18) and mounts (16) wherein each said inflation or deflation controlling means includes:

an inflation valve (20), said inflation valve including means for controlling gaseous communication between said source (18) and said associated mount (16); and

a relief valve (40), said relief valve including means for controlling gaseous communication between the ambient and said associated mount (16), and

means (50), associated with each said inflation or deflation controlling means for activating said inflation or deflation controlling means, said activating means being automatically responsive to the position of said surface (62) with respect to said preselected plane (62) characterized in that said valve controlllng means are pushbuttons (28, 43).

2. Assembly as claimed in claim 1 wherein each said activating means (50) includes:

an activating arm (48), the position of said arm being responsive to the position of said surface (62).

3. Assembly as claimed in claim 1 wherein said activating means includes:

a lever (50), said lever having one end thereof defining a first arm (48) being operative with said pushbuttons (28, 43), and having a second arm (52) cooperatively associated with said surface (62) whereby the position of said first arm (48) is responsive to the position of said surface (62).

4. Assembly as claimed in claim 3 wherein said first arm (48) of said lever (50) is adapted to translate in one plane; and

said valve controlling means (28, 43) are in close proximity to opposite surfaces of said lever (50) whereby if said first arm (48) translates in one direction in said plane said inflation valve (20) is actuated whereas if said first arm (48) translates in the opposite direction in said plane said relief valve (40) is actuated.

5. Assembly as claimed in claim 1 wherein said controlling means is a first arm (48) which effectively translates bidirectionally; and

said valve controlling means (28, 43) are in close proximity to opposite surfaces of said first arm (48) whereby if said first arm (48) translates in one direction said inflation valve (20) is actuated whereas if said first arm (48) translates in the opposite direction in said plane said relief valve (40) is actuated.

6. Assemby as claimed in claim 1 further comprising

a valve mounting bracket (44), said bracket aligning said gaseous communication controlling means of said valves (20, 40) with said activating means.

7. Assembly as claimed in claim 6 wherein said bracket (40) is U-shaped having one of said valves (20, 40) mounted in each side thereof.

8. Assembly as claimed in claim 7 wherein said valve activating means is a first arm (48) of a lever (50) said first arm extending between the sides of said U-shaped bracket (44).

9. Assembly as claimed in one of the claims 1 to 8 wherein said surface is formed by the surface of an optical bench (14).

## Patentansprüche

1. Vorrichtung zur Beibehaltung einer Fläche (62) in einer vorgewählten Ebene (61) hinsichtlich eines Grundkörpers (12) mit:

mehreren pneumatisch betätigbaren, von dem Grundkörper (12) gehalterten Ständern (16),

einer Quelle eines unter Druck stehenden Gases (18),

Hilfsmitteln (28, 43) zur individuellen Steuerung des Auf- oder Abfahrens jedes Ständers (16), die zwischen der Quelle (18) und den Ständern (16) angeordnet sind, und zu denen behören: ein Auffahrventil (20) mit Hilfsmitteln zur Einstellung einer Gasverbindung zwischen der Quelle (18) und dem zugeordneten Ständer (16), ein Entlastungsventil (40) mit Hilfsmitteln zur Einstellung einer Gasverbindung zwischen der Umgebung und dem zugeordneten Ständer (16) und Betätigungsglieder (50) der das Auf- oder Abfahren einstellenden Hilfsmittel, die jeden dieser Hilfsmittel zugeordnet sind und selbsttätig auf die Position der Fläche (62) hinsichtlich der vorgewählten Ebene (62) ansprechen, dadurch gekennzeichnet, daß die Ventile einstellenden Hilfsmittel Druckknöpfe (28, 43) sind.

2. Vorrichtung, wie im Anspruch 1 beansprucht, bei der jedes Betätigungsglied (50) einen Betätigungsarm (48) enthält, dessen Position auf die der Fläche (62) anspricht.

3. Vorrichtung, wie im Anspruch 1 beansprucht, bei der die Beätigungsglieder einen Hebel (50) enthalten, dessen eines Ende von einem mit den Druckknöpfen (28, 43) zusammenwirkenden ersten Arm (48) gebildet ist, und der einem zweiten Arm (52) aufweist, der der Fläche (62) zugeordnet ist und mit dieser zusammenwirkt, wobei die Position des ersten Armes (48) auf die der Fläche (62) anspricht.

4. Vorrichtung, wie im Anspruch 3 beansprucht, bei der der erste Arm (48) des Hebels (50) zu einer Translation in einer einzigen Ebene geeignet ist und sich die Ventile einstellenden Hilfsmittel (28, 43) in enger Nachbarschaft zu gegenüberliegenden Flächen des Hebels (50) befinden, so daß das Auffahrventil (20) betätigt wird, wenn der este Arm (48) eine Translationsbewegung in der einen Richtung der Ebene vornimmt, während das Entlastungsventil (40) betätigt wird, wenn der erste Arm (48) eine Translationsbewegung in der entgegengesetzten Richtung der Ebene vornimmt.

5. Vorrichtung, wie im Anspruch 1 beansprucht, bei der die Hilfsmittel zur Steuerung einen ersten eine wirksame Translation in beiden Richtungen vornehmenden Arm (48) enthalten und die Ventile einstellenden Hilfsmittel (28, 43) sich in enger Nachbarschaft zu gegenüberliegenden Flächen des ersten Armes (48) befinden, so daß das Auffahrventil (20) betätigt wird, wenn der erste Arm (48) eine Translationsbewegung in der einen Richtung vornimmt, während das Entlastungsventil (40) betätigt wird, wenn der ereste Arm (48) eine Translationsbewegung in der entegegengesetzten Richtung vornimmt.

6. Vorrichtung, wie im Anspruch 1 beansprucht, die ferner einem Ventilmontagearm (44) enthält, der die die Gasverbindung einstellenden Hilfsmittel der Ventile (20, 40) auf die Betätigungsglieder ausrichtet.

7. Vorrichtung, wie im Anspruch 6 beansprucht, bei der der Arm (44) eine U-Form aufweist und an jeder Seite des Armes eines der Ventile (20, 40) montiert ist.

8. Vorrichtung, wie im Anspruch 7 beansprucht, bei der das Ventilbetätigungsglied ein erster Arm (48) eines Hebels (50) ist und sich zwischen den Seiten des U-förmigen Armes (44) erstreckt.

9. Vorrichtung, wie in einem der Ansprüche 1 bis 8 beansprucht, bei der die Fläche von der Oberfläche einer optischen Bank (14) gebildet ist.

**Revendications**

1. Un assemblage pour maintenir une surface (62) dans un plans pré-choisi (61) par rapport à un élément de base (12); ledit assemblage comprenant:
   une pluralité de montages pneumatiques (16) supportés par ledit élément de base (12),
   une source de gaz comprimé (18)
   des moyens (28, 43) pour commander individuellement le gonflage our le dégonflage de chacun desdits montages (16), lesdits moyens étant disposés entre ladite source (18) et les montages (16) dans lesquels chacun desdits moyens de commande de gonflage ou dégonflage comprend:
   une valve de gonflage (20), ladite valve de gonflage comprenant des moyens pour commander la communication gazeuse entre ladite source (18) et ledit montage associé (16); et
   une valve de sécurité (40), ladite valve de sécurité comprenant des moyens pour commander la communication gazeuse entre l'atmosphère ambiante et ledit montage associé (16), et
   des moyens (50) associés à chacun desdits moyens de commande de gonflage ou dégonflage pour actionner lesdits moyens de commande du gonflage ou dégonflage, lesdits moyens d'action étant automatiquement sensibles à la position de ladite surface (62) par rapport audit plan pré-choisi (62) caractérisé en ce que lesdits moyens de commande de valve sont des boutons-poussoirs (28, 43).

2. Un assemblage comme revendiqué dans la revendication 1 dans lequel chacun desdits moyens d'action (50) comprend:
   un bras d'action (48), la position dudit bras étant sensible à la position de ladite surface (62).

3. Un assemblage comme revendiqué dans la revendication 1 dans lequel lesdits moyens d'action comprennent:
   un levier (50) ayant une de ses extrémités définissant un premier bras (48) qui est coopère avec lesdits boutons-poussoirs (28, 43) et ayant deuxième bras (32) associé en coopération avec ladite surface (62), par lequel la position dudit premier bras (48) est sensible à la position de ladite surface (62).

4. Un assemblage comme revendiqué dans la revendication 3 dans leque ledit premier bras (48) dudit levier (50) est adapté à se déplacer par translation dans un plan; et
   lesdits moyens de commande de valve (28, 43) sont très près des surfaces opposées dudit levier (50) de telle sorte que, si ledit premier bras (48) se déplace par translation dans une direction dans ledit plan, ladite valve de gonflage (20) est actionée tandis que si ledit premier bras (48) se déplace en translation dans la direction opposée dans ledit plan, ladite valve de sécurité (40) est actionnée.

5. Un assemblage comme revendiqué dans la revendication 1 dans lequel ledit moyen de commande est un premier bras (48) qui se déplace par translation effectivement dans deux directions; et
   lesdits moyens de commande de valve (28, 43) sont très proches des surfaces opposées dudit premier bras (48) de telle sorte que, si ledit premier bras (48) se déplace par translation dans une direction, ladite valve de gonflage (20) est actionnée tandis que, si ledit premier bras (48) se déplace par translation dans la direction opposée dans ledit plan, ladite valve de sécurité (40) est actionnée.

6. Un assemblage comme revendiqué dans la revendication 1 comprenant en plus:
   un support de montage de valve (44), ledit support alignant lesdits moyens de commande de communication du gaz desdites valves (20, 40) avec lesdits moyens d'action.

7. Un assemblage comme revendiqué dans la revendication 6 dans lequel ledit support (40) est formé en U, en ayant l'une desdites valves (20, 40) montée dans chacun de ses côtés.

8. Un assemblage comme revendiqué dans la revendication 7 dans lequel ledit moyen d'action des valves est un premier bras (48) d'un levier (50), ledit premier bras s'étendant entre les côtés dudit support (44) en forme de U.

9. Un assemblage comme revendiqué dans l'une quelconque des revendications de 1 à 8 dans lequel ladite surface est formée par la surface d'un banc d'optique (14).

FIG.1